# EUROPÄISCHE PATENTSCHRIFT

(11) **EP 3 095 624 B1**
(45) Veröffentlichungstag und Bekanntmachung des Hinweises auf die Patenterteilung: **18.11.2020**
(21) Anmeldenummer: 16170054.7
(22) Anmeldetag: 18.05.2016
(51) Int. Cl.: B60G 3/14

(54) **ACHSANORDNUNG**
AXLE ASSEMBLY
AGENCEMENT D'AXE

(30) Priorität: 19.05.2015 DE 202015102551 U
(43) Veröffentlichungstag der Anmeldung: 23.11.2016
(73) Patentinhaber: Alois Kober GmbH, 89359 Kötz (DE)
(72) Erfinder: Lehner, Helmut, 89359 Kötz (DE); Heine, Sebastian, 88099 Neukirch (DE); Spiegler, Roland, 89312 Günzburg (DE)
(74) Vertreter: Ernicke, Klaus Stefan

(56) Entgegenhaltungen:
- WO-A1-94/11210
- DE-A1-102005 002 515
- DE-A1-102006 005 607
- DE-U1- 7 829 589
- DE-U1- 20 105 614
- DE-U1- 29 822 564
- DE-U1-202010 008 145
- US-A1- 2011 272 910
- US-B1- 6 416 136

## Beschreibung

Die Erfindung betrifft eine Achsanordnung mit den Merkmalen im Oberbegriff des Hauptanspruchs.

Eine solche Achsanordnung ist aus der Praxis bekannt. Sie besteht aus einem über die Fahrzeugbreite durchgehenden Achsrohr, an dessen Enden Achsböcke zur Befestigung an den aufrechten Mittelstegen von Längsträgern eines Chassis oder Fahrgestells angeordnet sind. Im Innenraum des Achsrohrs sind an beiden Enden Radschwinghebel zur jeweiligen Aufnahme eines Fahrzeugrads drehbar gelagert und werden dabei durch Gummischnüre, Torsionsstäbe oder andere Federelemente beaufschlagt, die endseitig im Achsrohr eingelegt sind. Solche Achsanordnungen werden als Gummifederachsen oder Drehstabfederachsen bezeichnet.

Die DE 20 2011 102 863 U1 zeigt eine Starrachse mit Blattfederung, die unter einem Chassis mit Doppelboden angeordnet und deren Federböcke an der Unterseite der Längsträger befestigt sind.

Die US 2011/0272910 A1 offenbart eine Achsanordnung für Fahrzeuge, insbesondere Straßenfahrzeuge, mit einem Chassis, wobei die Achsanordnung einen Achsbock und einen Radschwinghebel zur Aufnahme eines Fahrzeugrads oder einer Radbremse aufweist, wobei der Achsbock mit einem Stützträger verbunden ist, wobei der Achsbock einen Anbauflansch zur Verbindung mit dem Chassis aufweist, wobei der Achsbock eine quer vom Anbauflansch abstehende Konsole aufweist, wobei der Achsbock und der Stützträger an der Konsole einen Verbindungsbereich aufweisen, und der Achsbock und der Stützträger an dem Verbindungsbereich einander stützend überlappen und flächig aneinander liegen sowie aneinander befestigt sind, und wobei der Radschwinghebel am Achsbock oder am Stützträger schwenkbar gelagert ist.

Es ist Aufgabe der vorliegenden Erfindung, eine verbesserte Achsanordnung aufzuzeigen.

Die Erfindung löst diese Aufgabe mit den Merkmalen im Anspruch 1. Bei der beanspruchten Achsanordnung ist der Radschwinghebel am Achsbock oder an einem mit dem Achsbock verbundenen Stützträger schwenkbar gelagert. Auf ein Achsrohr kann verzichtet werden.

Die beanspruchte Achsanordnung hat den Vorteil einer besseren Lagerung und Führung des Radschwinghebels.

Außerdem kann eine bessere mechanische Stabilität der Achsanordnung erzielt werden.

Der oder die Radschwinghebel ist/sind außenseitig am Chassis und neben einem Längstragelement des Chassis angeordnet. Am einen Ende der Radschwinghebel ist eine Aufnahme, z.B. ein Nabenträger, für das Fahrzeugrad oder für die Radbremse angeordnet. Durch die Achsanordnung kann eine Einzelradaufhängung gebildet werden.

Die Achsanordnung kann modular ausgebildet sein. Sie erlaubt Anpassungen an unterschiedliche Chassis-Formen. Die Komponenten der Achsanordnung, insbesondere Stützträger, Achsbock und Radschwinghebel, können unterschiedlich ausgebildet, insbesondere dimensioniert sein. Sie können bedarfsweise miteinander kombiniert bzw. ausgetauscht werden. Hierbei kann ein Baukastensystem gebildet werden, das Anpassungen der Achsanordnung an unterschiedliche Erfordernisse, z.B. Fahrzeuglasten, Fahrzeugarten (Reisemobil oder Nutzfahrzeug), einsatzbereich bzw. Bodenfreiheit etc. erlaubt. Dies ist für die Erstausrüstung und insbesondere für eine Nachrüstung eines Chassis oder Fahrzeugs mit der beanspruchten Achsanordnung von Vorteil.

Durch die Modularität können die Chassis- oder Rahmenbreite, die Spurweite und die Chassis- oder Fahrhöhe variiert werden. Die verschiedenen Teile der Achsanordnung können von außen an das Chassis adaptiert werden. Außerdem kann die Stellung bzw. Ausrichtung des Radschwinghebels variiert werden.
Der bevorzugt unterhalb des Chassis angeordnete Stützträger schränkt nicht den Freiraum im Chassis und zwischen den Längstragelementen ein. Die Achsanordnung greift bevorzugt nicht in den Raum zwischen den Längstragelementen ein und erlaubt eine insofern uneingeschränkte Nutzung des Freiraums. Der Stützträger kann auch in eine evtl. Bodenplatte an der Chassisunterseite integriert werden.

Weitere Vorteile ergeben sich für die Bodenfreiheit, insbesondere wenn der mit dem Achsbock verbundene Stützträger gemäß eines eigenständigen Erfindungsgedankens eine flache Querschnittsform aufweist und liegend angeordnet ist. Seine vorzugsweise parallelen Breitseiten weisen dadurch nach oben und unten und seine geraden oder gewölbten Schmalseiten in Fahrtrichtung. Eine solche bevorzugt zumindest angenähert rechteckige Querschnittsform hat Vorteile für eine Erhöhung der mechanischen Stabilität der Achsanordnung und auch für die damit erzielbare Fahrstabilität des mit ein oder mehreren solcher Achsanordnungen ausgerüsteten Fahrzeugs. Der Stützträger mit der flachen Querschnittsform kann generell für Achsanordnungen für Fahrzeuge, insbesondere Straßenfahrzeuge, mit einem Chassis eingesetzt werden, wobei die Achsanordnung einen Achsbock und einen Radschwinghebel zur Aufnahme eines Fahrzeugrads oder einer Radbremse aufweist.

Günstig sind außerdem die verbesserten Anbaumöglichkeiten für eine Federung und/oder Dämpfung sowie für deren Angriff am Radschwinghebel. Für den besagten Anbau steht viel Platz zur Verfügung. Die Anbindungen an Radschwinghebel und Chassis können variiert werden. Zudem ist eine große Auswahl an Federelementen möglich. Die Achsanordnung kann z.B. wahlweise mit einer Luftfederung, einer Schraubenfederung oder dgl. ausgerüstet werden.

Die beanspruchte Achsanordnung eignet sich für beliebige Arten von Fahrzeugen, vorzugsweise Straßenfahrzeugen. Dies können z.B. Anhänger oder Kraftfahrzeuge sein. Variationen sind auch hinsichtlich des Chassis oder Fahrgestells des Fahrzeuges möglich. Eine besondere Eignung besteht für Freizeitmobile, insbesondere Wohnmobile, oder auch für Nutzfahrzeuge, z.B. Verkaufs- oder Präsentationsmobile. Eine besondere Eignung der Achsanordnung besteht für ein Anbauchassis für einen motorisierten Zugkopf. Dieser kann mit einem Frontantrieb ausgerüstet sein. Die Achsanordnung lässt sich mit Vorteil an einem Chassis einsetzen, das Stauraum im Unterbodenbereich bietet. Die platzsparende Achsanordnung hat hierfür besondere Vorteile und kann vom Boden eines Aufbaus überdeckt werden.

Die Achsanordnung ist vorzugsweise als Schleppachse ausgebildet. Bei einem Anhänger bietet die beanspruchte Achsanordnung andererseits den Vorteil, einer günstigen Anbaumöglichkeit für eine Antriebseinheit eines Hilfsantriebs oder Rangierantriebs, die am Fahrzeugrad bedarfsweise angreifen kann.

Der Achsbock und der Stützträger sind in geeigneter Weise miteinander verbunden sowie aneinander befestigt. Der Verbindungsbereich befindet sich an einer abstehenden Konsole des Achsbocks. Hierbei kann im Verbindungsbereich eine gegenseitige Überlappung und formschlüssige Aufnahme des Stützträgerendes am Achsbock erfolgen. Dies ist für eine feste Verbindung und für eine hohe mechanische Stabilität der Achsanordnung von Vorteil.

Von Vorteil ist auch die kompakte Ausbildung von Achsbock und Radlagerung bzw. Schwinghebellagerung. Sie spart Platz und Gewicht. Das Fahrzeugrad kann nahe am Längstragelement des Chassis angeordnet sein. Das Verhältnis zwischen Spurweite und Nutzbreite des Chassis kann optimiert werden.

Der Stützträger kann eine große und über die Chassis- oder Fahrzeugbreite reichende Länge aufweisen, wobei er an beiden Enden jeweils mit einem Achsbock verbunden ist.

Hierdurch kann die Achsanordnung eine besonders hohe mechanische Stabilität erhalten. Die Achsböcke können unabhängig voneinander seitlich am Chassis bzw. an dessen Längstragelementen montiert bzw. befestigt werden. Die erforderliche Stützträgerlänge kann durch Ablängen eines stangenartigen Trägerprofils oder ggf. durch Mehrteiligkeit und Distanzstücke eingestellt werden. Evtl. kann die Verbindungs- und Befestigungsposition zwischen Stützträger und Achsbock in Grenzen variabel und einstellbar sein. Alternativ kann der Stützträger verkürzt und mehrfach vorhanden sein, wobei z.B. jeder Achsbock einen eigenen stummelartigen Stützträger aufweist.

Ein Stützträger mit flacher Querschnittsform und liegender Anordnung kann unterhalb von den Längstragelement(en) angeordnet sein. Dies hat zum einen den Vorteil, dass in diesem Bereich das oder die Längstragelement(e) nicht geschwächt werden und ihre maximale Tragkraft haben. Andererseits beeinträchtigt die flache Querschnittsform des Stützträgers nicht die Bodenfreiheit.

Der einzelne Achsbock kann über den langen durchgehenden oder durch einen verkürzten stummelartigen Stützträger mechanisch versteift werden. Die Achsanordnung kann dadurch die bei der Fahrt auftretenden Kräfte und Momente besser und gleichmäßiger in das Chassis einleiten. Dies verbessert auch die Fahrstabilität. Besondere Vorteile ergeben sich dabei mit dem vorerwähnten Anbau-Chassis. Besonders für Fahrzeuge mit einem Wohnmobilaufbau oder einem anderen Kastenaufbau und Stauräumen im unteren Bodenbereich und im Innenbereich des Chassis ergeben sich durch die Achsanordnung raum- und fahrtechnische Vorteile sowie Stabilitätsvorteile. Trotz maximaler chassis- und bodenseitiger Innen- und Stauräume kann eine platzsparende, stabile und fahrtechnisch günstige Achsanordnung realisiert werden.

In den Unteransprüchen sind weitere vorteilhafte Ausgestaltungen der Erfindung angegeben.

Ferner können die Achsanordnung, das Chassis und das Fahrzeug folgende Ausgestaltungsmerkmale einzeln oder in Kombination aufweisen.
Der Stützträger der Achsanordnung kann als Hohlprofil mit Innenstegen ausgebildet sein. Der Stützträger kann eine zumindest angenähert rechteckige Querschnittsform haben. Er kann dabei parallele, ebene Breitseiten und ebene oder gewölbte Schmalseiten aufweisen.

Nach der Erfindung weist der Achsbock der Achsanordnung eine abstehende Konsole auf. Diese steht quer vom Achsbock und von einem Längsträger eines Chassis ab. Der Achsbock und der Stützträger weisen an der Konsole einen Verbindungsbereich auf. Die Konsole kann in einer Ausführung einen platten- oder bügelförmigen Konsolenträger und Stützarme zur Verbindung mit dem Achsbock, insbesondere mit einem Anbauflansch des Achsbocks, aufweisen.

Der Radschwinghebel der Achsanordnung ist am Achsbock oder an einer Außenseite des Stützträgers schwenkbar gelagert. Das Schwenklager des Radschwinghebels kann eine quer oder schräg zur Fahrtrichtung ausgerichtete Schwenkachse aufweisen. Der Radschwinghebel kann sich hauptsächlich längs der Fahrtrichtung erstrecken. Er kann dabei z.B. als Längslenker oder als Schräglenker ausgebildet sein.
Die Achsanordnung kann eine mit dem Radschwinghebel verbundene Federung aufweist. Die Federung kann ein oder mehrere Federelemente, z.B. Schraubenfedern oder Luftbalge, aufweisen. Die Federung kann eine Anbindung für ein Federelement an einen Radschwinghebel und an ein Längstragelement des Chassis aufweisen.

Die Achsanordnung kann eine mit dem Radschwinghebel verbundene Dämpfung aufweisen. Die Dämpfung kann ein oder mehrere Dämpfelemente, z.B. hydraulische Stoßdämpfer, aufweisen. Die Dämpfung kann eine Anbindung für ein Dämpfelement an einen Radschwinghebel und an ein Längstragelement des Chassis aufweisen.

Das beanspruchte Chassis kann als Anbauchassis für einen motorisierten Zugkopf ausgebildet sein. Das Chassis kann ein Längstragelement aufweisen. Dieses kann einzeln oder mehrfach, insbesondere in Doppelanordnung, vorhanden sein. Ein Längstragelement kann als metallischer Längsträger mit einem abgekanteten Trägerprofil ausgebildet sein. Das Anbauchassis kann ggf. nachträglich am Zugkopf montiert werden. Das beanspruchte Chassis kann alternativ als Standard- oder Serienchassis bzw. Fahrgestell oder Basischassis eines front- oder heckgetriebenen Fahrzeugs ausgebildet sein.

Der Zugkopf kann einen Frontantrieb mit angetriebener Vorderachse, Motor und Getriebe sowie Lenkeinrichtung und Bremsanlage aufweisen. Der Zugkopf kann ein Zugkopfchassis mit Längsträgern, ein oder mehrere Sitze und eine Kabine aufweisen. Diese kann eigenständig angeordnet oder Bestandteil eines Aufbaus sein.

Die Achsanordnung kann für ein Chassis vorgesehen sein, das ein oder mehrere Längstragelemente und ggf. ein oder mehrere Querträger aufweist. Der Achsbock der Achsanordnung kann zur Befestigung an einem Längstragelement des Chassis vorgesehen und ausgebildet sein.

Die Erfindung ist in den Zeichnungen beispielhaft und schematisch dargestellt. Im Einzelnen zeigen:
- Figur 1:: Ein Fahrzeug mit einem Chassis und einer ersten Varianten einer Achsanordnung in einer teilweise aufgebrochenen Seitenansicht,
- Figur 2:: eine abgebrochene perspektivische Detailansicht der Achsanordnung von Figur 1,
- Figur 3:: eine andere perspektivische Ansicht der Achsanordnung von Figur 2 und 3
- Figur 4:: eine Seitenansicht der Achsanordnung von Figur 1, 2 und 3,
- Figur 5:: eine zweite Variante einer Achsanordnung in einer perspektivischen Ansicht,
- Figur 6:: eine andere perspektivische Ansicht der Achsanordnung von Figur 5 und
- Figur 7:: eine Seitenansicht der Achsanordnung von Figur 5 und 6.

Die Erfindung betrifft eine Achsanordnung (10) für ein Fahrzeug (1), insbesondere ein Straßenfahrzeug, mit einem Chassis (2). Die Erfindung betrifft ferner ein Chassis (2) mit einer solchen Achsanordnung (10). Im weiteren bezieht sich die Erfindung auch auf ein Fahrzeug (1) mit einer Achsanordnung (10) und einem Chassis (2).

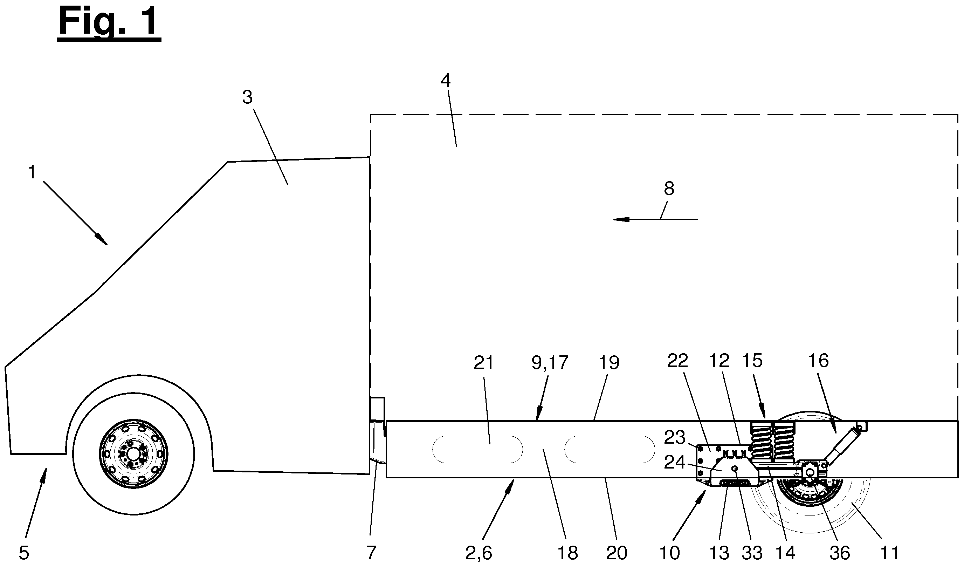

Das Fahrzeug (1) kann von beliebiger Art sein. Es kann mit oder ohne Motorisierung ausgebildet sein. Das in Figur 1 beispielhaft dargestellte Fahrzeug (1) ist ein Straßenfahrzeug mit einem Fahrgestell (2), das eine Kabine (3) und/oder einen Aufbau (4) trägt. Das gezeigte Fahrzeug (1) ist ein Kraftfahrzeug, welches mit einem motorischen Frontantrieb ausgerüstet ist.

Das Chassis (2) kann ein herstellerseitig geliefertes Fahrgestell oder Basischassis sein, an dem die nachfolgend erläuterte Achsanordnung (10) nachträglich oder im Austausch gegen eine vorhandene Achsanordnung eingebaut wird. Im gezeigten Ausführungsbeispiel von Figur 1 ist das Chassis (2) als Anbauchassis (6) ausgebildet, welches mit einer Achsanordnung (10) ausgerüstet ist und an einen motorisierten Zugkopf (5) nachträglich angebaut wird, z.B. mittels eines Adapters (7). Der Anbau erfolgt an die Längsträger eines Zugkopf-Fahrgestells, wobei durch einen Adapter (7) eine Anpassung der Anbauchassis (6) in der Höhe und/oder der Breite bedarfsweise vorgenommen werden kann.

In einer anderen und nicht dargestellten Ausführungsform kann das Fahrzeug (1) ein Anhänger sein, der mittels einer Zugeinrichtung, z.B. einer starren oder beweglichen Deichsel, mit einem motorisierten Zugfahrzeug und von diesem geschleppt werden kann. Ein solcher Anhänger hat ein entsprechend angepasstes Chassis und eine hieran adaptierte Achsanordnung (10).

Das gezeigte Chassis (2) weist ein oder mehrere Längstragelemente (9) auf, die durch ein oder mehrere Querträger (nicht dargestellt) verbunden sein können. Vorzugsweise sind zwei parallele Längstragelemente (9) vorhanden, die sich in Längsrichtung des Fahrzeugs (1) bzw. in Fahrtrichtung (8) erstrecken. Im gezeigten Ausführungsbeispiel sind die Längstragelemente (9) als gerade oder abgekantete Trägerprofile (17) ausgebildet, die aus Metall, bevorzugt Stahl, bestehen und einen aufrechten Steg oder Trägersteg (18) mit einem oberen und unteren längs laufenden Rand (19,20) aufweisen. Alternativ können die Längstragelemente (9) in anderer Weise ausgebildet sein.

Auf den Längstragelementen (9), insbesondere deren oberen Rändern (19), kann ein ebener Boden des Aufbaus (4) angeordnet und befestigt werden. Der Boden kann die Achsanordnung (10) übergreifen. Er braucht dann keine Radausschnitte und kann vollflächig genutzt werden.

In den gezeigten Ausführungsbeispielen ist das Trägerprofil (17) als z.B. L-förmig abgekantetes Profil mit einem Obergurt (19) ausgebildet. Alternativ sind andere Profilgeometrien möglich. Im Steg (18) können ein oder mehrere Stegöffnungen (21) angeordnet sein, die einen externen Zugang zu dem Innenraum des Chassis zwischen den Trägerprofilen (17) und zu dort ggf. ausgebildeten Stauräumen im Unterbodenbereich des Fahrzeuges (1) bzw. des Aufbaus (4) bieten.

Am Chassis (2) können eine oder mehrere der nachfolgend beschriebenen Achsanordnungen (10) angeordnet sein. Die Zeichnungen zeigen jeweils eine einzelne Achsanordnung (10) und deren Ausbildung in zwei verschiedenen Varianten. Alternativ können zwei, drei oder mehr Achsanordnungen (10) zur Bildung einer Tandem- oder Tripelachse etc. vorhanden sein. In den gezeigten Ausführungsbeispielen ist die Achsanordnung (10) jeweils als Schleppachse ausgebildet, deren Räder (11) nicht mit dem Antriebsmotor des Fahrzeugs (1) verbunden sind.

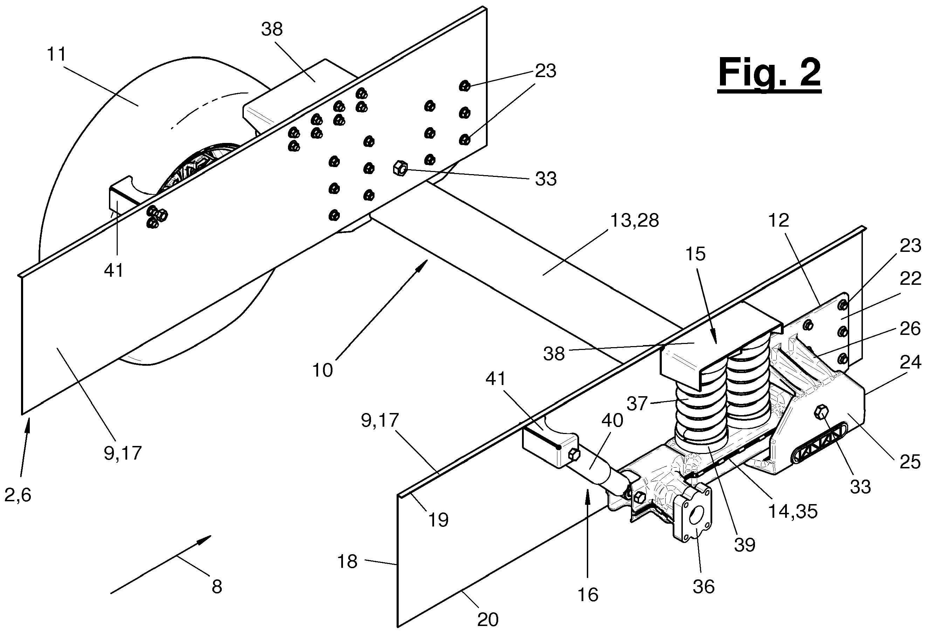

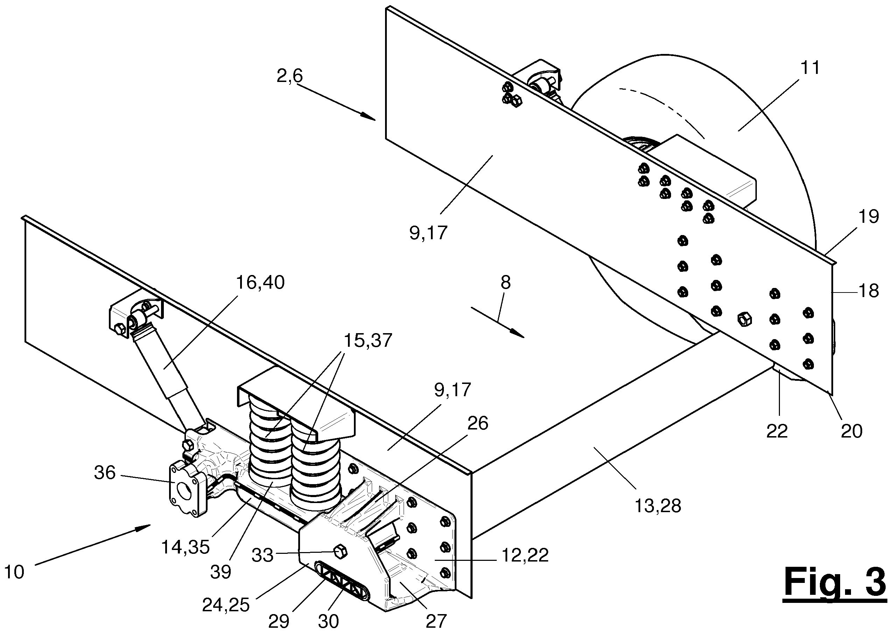

Figur 2 bis 4 und Figur 5 bis 7 zeigen zwei Varianten einer Achsanordnung (10).

In beiden Varianten weist die Achsanordnung (10) zumindest einen Achsbock (12) und einen Radschwinghebel (14) sowie einen Stützträger (13) auf. Ferner können eine Federerung (15) und/oder eine Dämpfung (16) für den Radschwinghebel (14) vorhanden sein. Der Radschwinghebel (14) kann an seinem freien Ende über einen Nabenträger (36) mit einem Fahrzeugrad (11) oder einer Radbremse verbunden werden. Die Achsanordnung (10) bewirkt eine Einzelradaufhängung der Fahrzeugräder (11).

Die Achsanordnung (10) kann modular ausgebildet sein und den bedarfsweisen Austausch oder eine Anpassung ihrer vorgenannten Komponenten (12,13,14,15,16) erlauben. Die Komponenten (12,13,14,15,16) können eine bedarfsweise, z.B. lastabhängige, angepasste Form, Dimensionierung und Anordnung aufweisen. Die Achsanordnung (10) und ihre Komponenten (12,13,14,15,16) können ein Baukastensystem bilden.

Der Achsbock (12) ist mit einem Stützträger (13) verbunden. Dies ist eine feste Verbindung bzw. Befestigung, mit der die im Fahrbetrieb auftretenden Kräfte und Momente übertragen werden können. Der Stützträger (13) ist quer oder schräg zum Achsbock (12) sowie zur Fahrtrichtung (8) ausgerichtet. Er ist ferner zur Innenseite des Fahrzeuges (1) und des Chassis (2) gerichtet.

In den gezeigten Varianten weist die Achsanordnung (10) jeweils zwei Achsböcke (12) auf, die an den Enden eines langen Stützträgers (13) angeordnet und befestigt sind. Der Stützträger (13) reicht über die gesamte Breite des Chassis (2) und ragt mit seinen Enden jeweils noch ein Stück über die Längstragelemente (9) hinaus. Durch einen Austausch oder eine Anpassung des Stützträgers (13) kann die Achsanordnung (10) an unterschiedliche Chassisbreiten und/oder Spurweiten adaptiert werden. Der Stützträger (13) kann einteilig oder mehrteilig ausgebildet sein. Zur Anpassung an unterschiedliche Chassisbreiten und/oder Spurweiten können Distanzstücke eingefügt werden.

In einer anderen, nicht dargestellten Ausführungsform, kann eine Achsanordnung (10) jeweils nur einen Achsbock (12) und einen damit verbundenen verkürzten Stützträger (13) aufweisen, der stummelartig ausgebildet ist und mit dem Chassis (2) und/oder dem Aufbau (4) in geeigneter Weise verbunden sein kann. Die verkürzten Stützträger (13) reichen jeweils maximal bis zur Mitte des Chassis (2).

Der einzeln oder mehrfach vorhandene Achsbock (12) dient jeweils zur Verbindung der Achsanordnung (10) mit einem Längstragelement (9). Er wird vorzugsweise an dessen aufrechten Trägersteg (18) außenseitig angeordnet und mittels einer Befestigung (23) fixiert. Die Befestigung (23) kann lösbar sein, wobei sie z.B. als Schraubverbindung, Nietverbindung oder dergleichen ausgebildet ist.

Der Achsbock (12) weist jeweils einen aufrechten Anbauflansch (22) auf, der plattenförmig gestaltet ist und zur Anlage und Verbindung mit dem Chassis (2), insbesondere dem Längstragelement (9) dient. Er kann an dessen Form angepasst sein. Der Anbauflansch (22) kann nach unten über den Rand (20) des Längstragelements (9) hinausragen. Die Höhe des Anbauflansches (22) kann kleiner als die Höhe des Steges (18) sein.

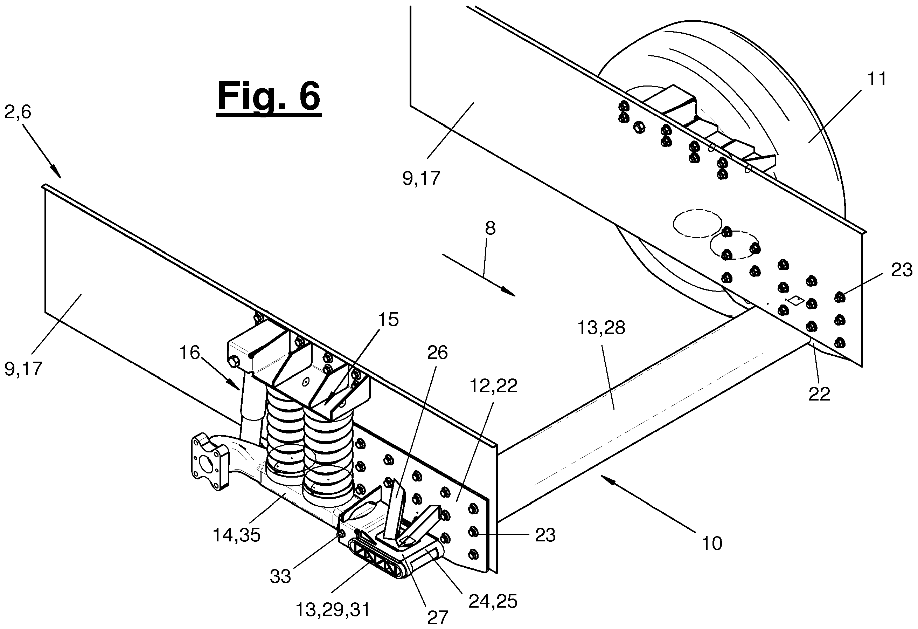

Der Achsbock (12) weist ferner eine abstehende Konsole (24) auf. Diese steht quer vom Anbauflansch (22) ab. Die Konsole (24) kann einen Konsolenträger (25) und ein oder mehrere Stützarme (26) zu dessen Verbindung mit dem Anbauflansch (22) aufweisen. In der ersten Variante von Figur 1 bis 4 ist der Konsolenträger (25) bügelartig ausgebildet. Er bildet zusammen mit dem Anbauflansch (22) eine nach oben sowie in Fahrtrichtung (8) nach vorn und hinten offene Aufnahmewanne, in die der Radschwinghebel (14) mit dem rückwärtigen Ende eintauchen kann. In der zweiten Variante von Figur 6 bis 7 hat der Konsolenträger (25) eine Manschettenform oder Plattenform.

In der gezeigten Ausführungsform ist der Radschwinghebel (14) am Achsbock (12), insbesondere an der Konsole (24) mittels eines Schwenklagers (33) schwenkbar gelagert. Bei der ersten Variante ist das Schwenklager (33) zentral am bügelartigen Konsolenträger (25) und mit seiner Achse Abstand oberhalb des Stützträgers (13) angeordnet. Bei der zweiten Variante der Achsanordnung (10) ist das Schwenklager (33) an der in Fahrtrichtung (8) gelegenen Stirnseite des Konsolenträgers (25) angeordnet.

Der Radschwinghebel (14) erstreckt sich hauptsächlich in Fahrtrichtung (8). Er kann dabei parallel zu dem benachbarten Längstragelement (9) oder schräg dazu angeordnet sein. Hierdurch wird ein Längslenker oder Schräglenker gebildet. Die Achse des Schwenklagers (33) ist in den gezeigten Ausführungsbeispielen quer zur Fahrtrichtung (8) zur Bildung eines Längslenkers ausgerichtet. Für einen Schräglenker kann sie alternativ eine Schräglage haben, wobei dann der Radschwinghebel (14) mit seinem freien Ende schräg nach außen gerichtet ist.

In den gezeigten Ausführungsbeispielen erstreckt sich der Radschwinghebel (14) vom Schwenklager (33) in Fahrtrichtung (8) nach vorn zur Kabine (3). Alternativ kann die Anordnung umgedreht sein. Der Radschwinghebel (14) weist einen Hebelarm (35) auf, der z.B. als Rohr oder Hohlprofil aus zwei Schalenteilen ausgebildet ist. Der Hebelarm (35) trägt am rückwärtigen Ende ein Lagerelement, z.B. ein Lagerauge, zur Bildung des Schwenklagers (33) und am anderen Ende einen quer abstehenden Nabenträger (36). Dies kann ein Anbauflansch zur Montage eines Radzapfens oder einer Nabe bzw. einer Radbremse sein. Alternativ kann ein Radzapfen bzw. eine Nabe auch an das Hebelende angeformt sein.

Der Stützträger (13) hat eine flache und liegend angeordnete Querschnittsform. Diese Ausbildung und Anordnung hat eine eigenständige erfinderische Bedeutung. Der Stützträger (13) hat vorzugsweise eine balkenartige Form und eine bevorzugt gerade Erstreckung. Alternativ sind andere Formen möglich. Der vorzugsweise leichtgewichtige Stützträger (13) besteht aus einem beliebig geeigneten Material, vorzugsweise Metall oder Kunststoff oder einem Verbundmaterial. Er ist z.B. als Hohlprofil mit einem Mantel (29) und mit Innenstegen (30) ausgebildet. Er kann insbesondere als Strangpressprofil aus Leichtmetall, z.B. einer Aluminiumlegierung, ausgebildet sein.

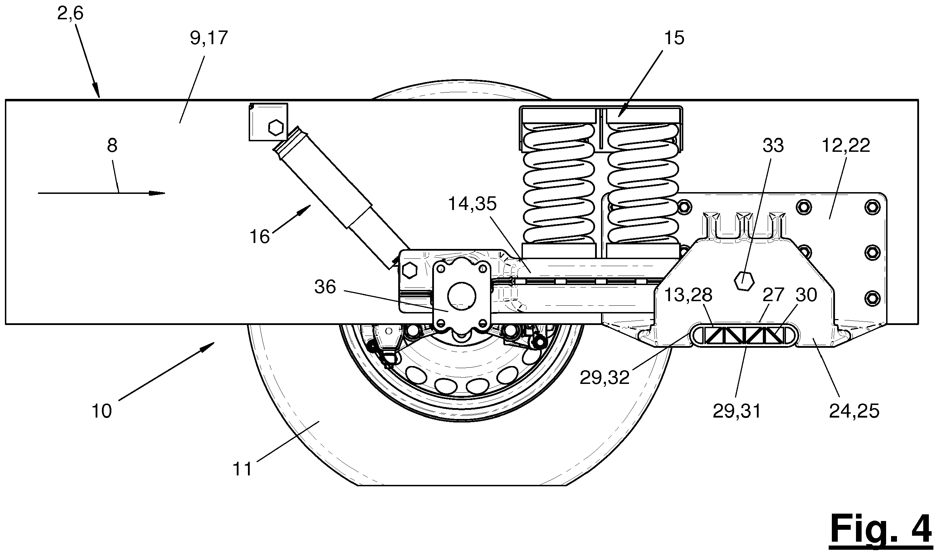

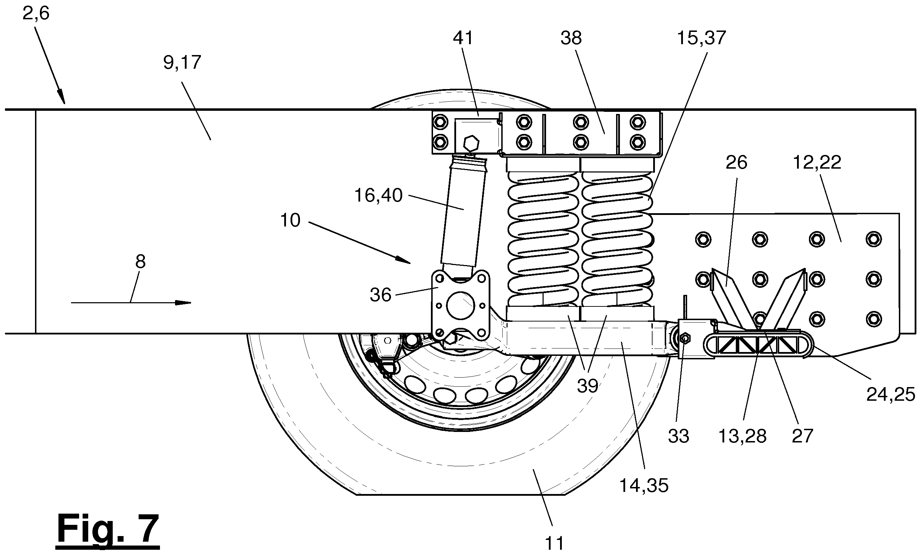

Wie die Seitenansichten von Figur 4 und 7 zu beiden Varianten verdeutlichen, weist der flache Stützträger (13) eine zumindest angenähert rechteckige Querschnittsform auf. Er hat parallele, ebene Breitseiten (31) und ebene oder gewölbte, insbesondere konvex nach außen gewölbte Schmalseiten (32). Bei der liegenden Anordnung sind die Breitseiten (31) nach oben und unten gerichtet und die Schmalseiten (32) in und gegen die Fahrtrichtung (8) bzw. die Fahrzeuglängsachse gerichtet.

Der Stützträger (13) ist in den gezeigten Ausführungsbeispielen unterhalb des Chassis (2) und des oder der Längstragelemente(s) angeordnet. Alternativ kann ein Längsträger (13) auch weiter oben angeordnet sein und sich durch eine entsprechende Öffnung im aufrechten Steg (13) des Längstragelements (9) erstrecken.

Die Verbindung des Achsbocks (12) und des zugehörigen Stützträgers (13) erfolgt im Bereich der Konsole (24) und in einem Verbindungsbereich (27). Der Achsbock (12) und der Stützträger (13) überlappen einander stützend an dem Verbindungsbereich (27) und liegen flächig aneinander. Hierbei kann Formschluss und/oder Klemmschluss bestehen. Der Verbindungsbereich (27) befindet sich an der Unterseite der Konsole (24), insbesondere des jeweiligen Konsolenträgers (25). Dieser kann hierfür eine entsprechende Formgebung mit einer nutenartigen Vertiefung aufweist. Eine feste Verbindung zwischen dem Achsbock (12) und dem Ende des zugehörigen Stützträgers (13) kann z.B. stofflich durch Kleben, Schweißen, Löten, und/oder mechanisch durch Schrauben, Niete, Bolzen oder dgl. erfolgen.

Der gezeigte lange Stützträger (13) ist über die Achsböcke (12) mittelbar mit dem Chassis (2) verbunden. Zusätzlich kann eine direkte Verbindung mit dem Chassis (2), insbesondere mit den Längstragelementen (9) oder mit einem an deren Unterrand angeordneten Bodenteil bestehen. Hierfür kann z.B. ein Beschlag oder dgl. vorhanden sein. Die Federung (15) ist jeweils zwischen dem Radschwinghebel (14) und dem Chassis (2), insbesondere dem Längstragelement (9), angeordnet. Sie weist ein oder mehrere Federelemente (37) und Anbindungen (38,39) für die Verbindung mit dem Längstragelement (9) und dem Hebelarm (35) auf. Die Federung (15) ragt in den gezeigten Ausführungsbeispielen maximal bis zum oberen Rand des Längstragelements (9). Der Federweg des Rads (11) endet unterhalb der Oberkante des Chassis (2) bzw. der Längstragelemente (9) und einem dort evtl. angeordneten Boden des Aufbaus (4).

Die Federung (15) und ihre Federelemente (37) können unterschiedlich ausgebildet sein. In den beiden gezeigten Varianten der Achsanordnung (10) kommt jeweils eine Schraubfederung zum Einsatz. Sie weist eine oder mehrere, z.B. zwei parallele Schraubenfedern (37) auf, die stehend bzw. vertikal angeordnet sind und in Fahrtrichtung (8) hintereinander angeordnet sind. Die chassisseitige Anbindung (38) ist z.B. als brückenartiges Winkelblech ausgebildet, welches mit einem aufrechten Flansch am Steg (18) befestigt, insbesondere angeschraubt ist und mit einem liegenden Flansch die Schraubenfedern (37) übergreift und nach oben abstützt. Die Anbindungen (39) am Radschwinghebel (14) sind als Ringführungen für das jeweilige Schraubenfederende ausgebildet.

In einer anderen und nicht dargestellten Ausführungsform kann die Federung (15) z.B. als Luftfederung ausgebildet sein. Ein Federelement (37) wird dann von einem Luftbalg gebildet. Daneben sind weitere Abwandlungen möglich, z.B. durch Gummiblöcke als Federelement (37). Ferner sind Kombinationen unterschiedlicher Federelemente (37) möglich.

Die Achsanordnung (10) kann außerdem eine Niveauregulierung zur Veränderung der Fahrhöhe bzw. Bodenfreiheit des Chassis (2) aufweisen. Eine solche Niveauregulierung kann ggf. mit der Federung (15) kombiniert sein.

Die Dämpfung (16) wirkt ebenfalls zwischen dem Chassis (2), insbesondere dem Längstragelement (9), und dem Radschwinghebel (14). Sie weist in den beiden Varianten der Achsanordnung (10) jeweils ein Dämpfelement (40) z.B. einen hydraulischen Stoßdämpfer, mit Anbindungen (41,42) auf. Die Ausrichtung und Anordnung des Stoßdämpfers (40) ist in den beiden Varianten unterschiedlich. Die erste Variante von Figur 1 bis 4 zeigt eine schräge Dämpfanordnung, wobei die chassisseitige Anbindung (41) in Fahrtrichtung (8) nach vorn geneigt und von der Anbindung (42) am Hebelarm (35) axial distanziert ist. Die Anbindung (41) befindet sich am oberen Rand des Längstragelements (9) und ist dort am Steg (18) in geeigneter Weise befestigt, z.B. angeschraubt.

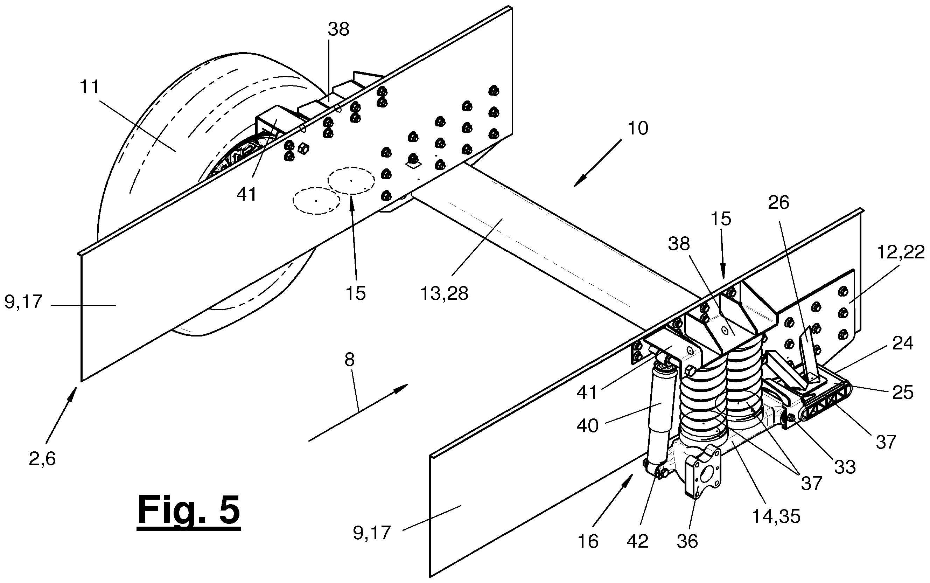

In der zweiten Variante von Figur 5 baut die Dämpfung (15) kompakter, wobei das Dämpfelement, insbesondere der Stoßdämpfer (40), eine aufrechte Lage einnimmt. In beiden Varianten ragt die Dämpfung (16) nicht nach oben über den Rand des Chassis (2) bzw. des Längstragelements (9) hinaus.

In der zweiten Variante ist das Schwenklager (33) tiefer als bei der ersten Variante angeordnet. Es befindet sich mit seiner Lagerachse etwa in Höhe des Stützträgers (13). An der in Fahrtrichtung (8) weisenden Frontseite des Konsolenträgers (25) ist dazu ein Lagerbock befestigt oder angeformt.

Bei der zweiten Variante ist auch der Hebelarm (35) des Radschwinghebels (14) tiefer angeordnet. Dies erlaubt die platzsparende stehende Dämpferanordnung und ermöglicht außerdem die Anbindungen (38,41) tiefer am Chassis (2) anzuordnen. Bei der zweiten Variante von Figur 5 bis 7 ist ferner der Achsbock (12), insbesondere dessen Konsolenträger (25), mit den schräg ausgestellten Stützarmen (26) filigraner und platzsparend ausgebildet.

Abwandlungen der gezeigten und beschriebenen Ausführungsformen sind in verschiedener Weise möglich. Insbesondere können die Merkmale der verschiedenen Ausführungsbeispiele und deren Abwandlungen beliebig miteinander vertauscht werden.

In Abwandlung der gezeigten Ausführungsformen kann der Radschwinghebel (14) am Stützträger (13) gelagert werden. Die Lagerstelle bzw. das Schwenklager (33) befindet sich dabei an der Außenseite des Stützträgers (13), insbesondere am Mantel (29) oder an der Trägerstirnseite. Zur Lagerbildung kann ein entsprechendes Lagerelement, z.B. ein Lagerbock, am Stützträger (13) lokal angeordnet und befestigt werden. Die Befestigung (23) kann formschlüssig ineinander greifende Wandverformungen am Steg (18) und am Anbauflansch (22) beinhalten.

Der Federung (15) und/oder die Dämpfung (16) können in anderer Weise mit dem Radschwinghebel (14) und/oder dem Längstragelement (9) verbunden werden. Der Radschwinghebel (14) kann z.B. nach hinten über das Schwenklager (33) hinaus verlängert sein, wobei die Federung (15) und/oder die Dämpfung (16) an dieser Verlängerung angreifen. Es ist auch eine Verlängerung nach vorn über den Naben- oder Radträger (36) hinaus und eine entsprechende Veränderung der besagten Angriffsstelle möglich.

Die Anbindung (38) der Federung (15), insbesondere des oder der Federelemente (37), am Chassis (2) kann höhenverstellbar, bevorzugt in der Höhe verschieblich, sein. Auch der Achsbock (12) und/oder die Dämpfung (16) können eine höhenverstellbare Anbindung am Chassis (2) haben.

Die Achsanordnung (10) kann auch mit Vorteil bei einem Fahrzeug bzw. einem Chassis gemäß der DE 20 2011 102 863 U1 eingesetzt werden.

### BEZUGSZEICHENLISTE

- 1: Fahrzeug, Straßenfahrzeug
- 2: Fahrgestell, Chassis
- 3: Kabine
- 4: Aufbau
- 5: Zugkopf
- 6: Anbauchassis
- 7: Adapter
- 8: Fahrtrichtung
- 9: Tragelement, Längsträger
- 10: Achsanordnung
- 11: Rad
- 12: Achsbock
- 13: Stützträger
- 14: Radschwinghebel
- 15: Federung
- 16: Dämpfung
- 17: Trägerprofil
- 18: Steg, Trägersteg
- 19: Rand oben, Obergurt
- 20: Rand unten
- 21: Stegöffnung
- 22: Anbauflansch
- 23: Befestigung, Schraubverbindung
- 24: Konsole
- 25: Konsolenträger
- 26: Stützarm
- 27: Verbindungsbereich, Anlagebereich
- 28: Hohlprofil
- 29: Mantel
- 30: Innensteg
- 31: Breitseite
- 32: Schmalseite
- 33: Schwenklager
- 34: Lagerachse
- 35: Hebelarm
- 36: Nabenträger
- 37: Federelement, Schraubenfeder
- 38: Anbindung Chassis
- 39: Anbindung Radschwinghebel
- 40: Stoßdämpfer
- 41: Anbindung Chassis
- 42: Anbindung Radschwinghebel

## Patentansprüche

1. Achsanordnung für Fahrzeuge, insbesondere Straßenfahrzeuge (1), mit einem Chassis (2), wobei die Achsanordnung (10) einen Achsbock (12) und einen Radschwinghebel (14) zur Aufnahme eines Fahrzeugrads (11) oder einer Radbremse aufweist, wobei der Achsbock (12) mit einem Stützträger (13) verbunden ist, wobei der Radschwinghebel (14) zur Anordnung außenseitig am Chassis (2) und neben einem Längstragelement (9) des Chassis (2) ausgebildet ist, wobei der Achsbock (12) einen Anbauflansch (22) zur Verbindung mit dem Chassis (2) aufweist, wobei der Achsbock (12) eine quer vom Anbauflansch (22) abstehende Konsole (24) aufweist, wobei der Achsbock (12) und der Stützträger (13) an der Konsole (24) einen Verbindungsbereich (27) aufweisen, und der Achsbock (12) und der Stützträger (13) an dem Verbindungsbereich (27) einander stützend überlappen und flächig aneinander liegen sowie aneinander befestigt sind, und wobei der Radschwinghebel (14) am Achsbock (12) oder am Stützträger (13) schwenkbar gelagert (33) ist, und das Schwenklager (33) des Radschwinghebels (14) lokal an einem Mantel (29) des balkenförmigen Stützträgers (13) oder an der Konsole (24) angeordnet ist.

2. Achsanordnung nach Anspruch 1, **dadurch gekennzeichnet, dass** der balkenförmige Stützträger (13) quer oder schräg zum Achsbock (12) und zur Innenseite des Fahrzeugs (1) gerichtet ist und bevorzugt eine flache und liegend angeordnete Querschnittsform aufweist.

3. Achsanordnung nach Anspruch 1 oder 2, **dadurch gekennzeichnet, dass** die Achsanordnung (10) zwei Achsböcke (12) aufweist, die mit einem gemeinsamen Stützträger (13) an dessen Enden verbunden sind oder die jeweils mit einem eigenen Stützträger (13) verbunden sind.

4. Achsanordnung nach einem der vorhergehenden Ansprüche, **dadurch gekennzeichnet, dass** der aufrechte Anbauflansch (22) plattenförmig gestaltet ist und zur Anlage und Verbindung mit einem Längstragelement (9) des Chassis (2) ausgebildet ist.

5. Achsanordnung nach einem der vorhergehenden Ansprüche, **dadurch gekennzeichnet, dass** der Stützträger (13) eine große und über die Chassis- oder Fahrzeugbreite reichende Länge aufweist, wobei er an beiden Enden jeweils mit einem Achsbock (12) verbunden ist.

6. Achsanordnung nach Ansprüche 3 und 5, **dadurch gekennzeichnet, dass** der Stützträger (13) über die gesamte Breite des Chassis (2) reicht und mit seinen Enden jeweils noch ein Stück über die Längstragelemente (9) hinausragt.

7. Achsanordnung nach einem der vorhergehenden Ansprüche, **dadurch gekennzeichnet, dass** die Konsole (24) einen platten- oder bügelförmigen Konsolenträger (25) und Stützarme (26) zur Verbindung mit dem Achsbock (12), insbesondere mit dem Anbauflansch (22) des Achsbocks (12), aufweist.

8. Achsanordnung nach einem der vorhergehenden Ansprüche, **dadurch gekennzeichnet, dass** der Achsbock (12) und der Stützträger (13) einander stützend an dem Verbindungsbereich (27) überlappen und flächig aneinanderliegen, wobei Formschluss und/oder Klemmschluss besteht und der Verbindungsbereich (27) sich an der Unterseite der Konsole (24) befindet.

9. Achsanordnung nach einem der vorhergehenden Ansprüche, **dadurch gekennzeichnet, dass** die Achsanordnung (10) modular ausgebildet ist und an unterschiedliche Chassis-Formen, insbesondere unterschiedliche Chassis- oder Rahmenbreiten, Spurweiten und/oder Chassis- oder Fahrhöhen anpassbar ist.

10. Achsanordnung nach einem der vorhergehenden Ansprüche, **dadurch gekennzeichnet, dass** der Radschwinghebel (14) einen Hebelarm (35) aufweist, an dessen einem Ende das Schwenklager (33) und an dessen anderem Ende ein Nabenträger (36) angeordnet ist.

11. Chassis mit einer Achsanordnung (10) für Fahrzeuge, insbesondere Straßenfahrzeuge (1) mit einem Chassis (2), **dadurch gekennzeichnet, dass** die Achsanordnung (10) nach mindestens einem der Ansprüche 1 bis 10 ausgebildet ist.

12. Chassis nach Anspruch 11, **dadurch gekennzeichnet, dass** das Chassis (2) mindestens ein Längstragelement (9) aufweist, an dem ein Achsbock (14) einer Achsanordnung (10) mittels einer bevorzugt lösbaren Befestigung (23), insbesondere einer Schraubverbindung, befestigt ist.

13. Chassis nach Anspruch 11 oder 12, **dadurch gekennzeichnet, dass** ein oder mehrere Stützträger (13) unterhalb des Längstragelements (9) angeordnet ist/sind.

14. Fahrzeug, insbesondere Straßenfahrzeug (1) mit einem Chassis (2) und mit einer Achsanordnung (10), **dadurch gekennzeichnet, dass** die Achsanordnung (10) nach mindestens einem der Ansprüche 1 bis 10 ausgebildet ist.

15. Fahrzeug nach Anspruch 14, **dadurch gekennzeichnet, dass** das Chassis (2) nach mindestens einem der Ansprüche 11 bis 13 ausgebildet ist.

## Claims

1. Axle assembly for vehicles, in particular road vehicles (1), having a chassis (2), wherein the axle assembly (10) has an axle mount (12) and a wheel swing arm (14) for receiving a vehicle wheel (11) or a wheel brake, wherein the axle mount (12) is connected to a support rail (13), wherein the wheel swing arm (14) is configured for disposal on the external side of the chassis (2) and beside a longitudinal support element (9) of the chassis (2), wherein the axle mount (12) has an attachment flange (22) for connecting to the chassis (2), wherein the axle mount (12) has a console (24) which projects transversely from the attachment flange (22), wherein the axle mount (12) and the support rail (13) on the console (24) have a connection region (27), and the axle mount (12) and the support rail (13) at the connection region (27) overlap in a mutually supporting manner and bear on one another in a planar manner and are fastened to one another, and wherein the wheel swing arm (14) is mounted (33) so as to be pivotable on the axle mount (12) or on the support rail (13), and the pivot bearing (33) of the wheel swing arm (14) is locally disposed on a casing (29) of the beam-shaped support rail (13) or on the console (24).

2. Axle assembly according to Claim 1,
**characterized in that** the beam-shaped support rail (13) is oriented so as to be transverse or oblique to the axle mount (12) and to the internal side of the vehicle (1) and preferably has a flat cross-sectional shape which is disposed so as to lie horizontally.

3. Axle assembly according to Claim 1 or 2,
**characterized in that** the axle assembly (10) has two axle mounts (12) which at the ends of a common support rail (13) are connected to the latter, or which are in each case connected to a dedicated support rail (13).

4. Axle assembly according to one of the preceding claims,
**characterized in that** the upright attachment flange (22) is designed so as to be plate-shaped and is configured for bearing on and connecting to a longitudinal support element (9) of the chassis (2).

5. Axle assembly according to one of the preceding claims,
**characterized in that** the support rail (13) has a large length that reaches across the width of the chassis or the vehicle, wherein said support rail (13) at both ends is in each case connected to an axle mount (12).

6. Axle assembly according to Claims 3 and 5,
**characterized in that** the support rail (13) reaches across the entire width of the chassis (2) and by way of the ends of said support rail (13) protrudes in each case somewhat beyond the longitudinal support elements (9).

7. Axle assembly according to one of the preceding claims,
**characterized in that** the console (24) has a plate-shaped or bracket-shaped console support (25) and support arms (26) for connecting to the axle mount (12), in particular to the attachment flange (22) of the axle mount (12).

8. Axle assembly according to one of the preceding claims, **characterized in that** the axle mount (12) and the support rail (13) at the connection region (27) overlap in a mutually supporting manner and bear on one another in a planar manner, wherein there is a form-fit and/or an interference fit and the connection region (27) is situated on the lower side of the console (24).

9. Axle assembly according to one of the preceding claims,
**characterized in that** the axle assembly (10) is configured so as to be modular and to be adaptable to different chassis shapes, in particular different chassis or frame widths, wheel tracks, and/or chassis or running heights.

10. Axle assembly according to one of the preceding claims,
**characterized in that** the wheel swing arm (14) has a lever arm (35), the pivot bearing (33) being disposed on one end of said lever arm (35) and a hub carrier (36) being disposed on the other end of said lever arm (35).

11. Chassis having an axle assembly (10) for vehicles, in particular road vehicles (1), having a chassis (2),
**characterized in that** the axle assembly (10) is configured according to at least one of Claims 1 to 10.

12. Chassis according to Claim 11,
**characterized in that** the chassis (2) has at least one longitudinal support element (9) to which an axle mount (14) of an axle assembly (10) is fastened by means of a preferably releasable fastening (23), in particular a screw connection.

13. Chassis according to Claim 11 or 12,
**characterized in that** one support rail (13) or a plurality of support rails (13) is/are disposed below the longitudinal support element (9).

14. Vehicle, in particular a road vehicle (1), having a chassis (2) and having an axle assembly (10),
**characterized in that** the axle assembly (10) is configured according to at least one of Claims 1 to 10.

15. Vehicle according to Claim 14,
**characterized in that** the chassis (2) is configured according to at least one of Claims 11 to 13.

## Revendications

1. Ensemble d'essieu destiné à des véhicules, en particulier des véhicules routiers (1), ledit ensemble d'essieu comprenant un châssis (2), l'ensemble d'essieu (10) comprenant un support d'essieu (12) et un levier de roue oscillant (14) destiné à recevoir une roue de véhicule (11) ou un frein de roue, le support d'essieu (12) étant relié à une poutre de support (13), le levier de roue oscillant (14) étant conçu pour être disposé au côté extérieur au niveau du châssis (2) et à côté d'un élément de support longitudinal (9) du châssis (2), le support d'essieu (12) comportant une bride de montage (22) destinée à être reliée au châssis (2), le support d'essieu (12) comportant une console (24) saillant transversalement de la bride de montage (22), le support d'essieu (12) et la poutre de support (13) comportant une zone de liaison (27) au niveau de la console (24), et le support d'essieu (12) et la poutre de support (13) se chevauchant en appui l'un sur l'autre au niveau de la zone de liaison (27) et étant en appui à plat l'un sur l'autre et fixés l'un à l'autre, et le levier oscillant de roue (14) étant monté de manière pivotante (33) sur le support d'essieu (12) ou sur la poutre de support (13), et le palier de pivotement (33) du levier de roue oscillant (14) étant disposé localement au niveau d'une enveloppe (29) de la poutre de support (13) en forme de barre ou sur la console (24).

2. Ensemble d'essieu selon la revendication 1, **caractérisé en ce que** la poutre de support (13) en forme de barre est orientée transversalement ou obliquement par rapport au support d'essieu (12) et par rapport au côté intérieur du véhicule (1) et a de préférence une forme en coupe transversale plate disposée horizontalement.

3. Ensemble d'essieu selon la revendication 1 ou 2, **caractérisé en ce que** l'ensemble d'essieu (10) comporte deux supports d'essieu (12) qui sont reliés à une poutre de support (13) commune aux extrémités de celle-ci ou qui sont chacun reliés à une poutre de support (13) distincte.

4. Ensemble d'essieu selon l'une des revendications précédentes, **caractérisé en ce que** la bride de montage verticale (22) est en forme de plaque et est destinée à venir en appui sur un élément de support longitudinal (9) du châssis (2) et à être reliée audit élément.

5. Ensemble d'essieu selon l'une des revendications précédentes, **caractérisé en ce que** la poutre de support (13) a une grande longueur s'étendant sur la largeur du châssis ou du véhicule et est reliée aux deux extrémités à un support d'essieu (12).

6. Ensemble d'essieu selon les revendications 3 et 5, **caractérisé en ce que** la poutre de support (13) s'étend sur toute la largeur du châssis (2) et fait légèrement saillie avec ses extrémités des éléments de support longitudinaux (9).

7. Ensemble d'essieu selon l'une des revendications précédentes, **caractérisé en ce que** la console (24) comporte un support de console (25) en forme de plaque ou d'étrier et des bras de support (26) destiné à être reliés au support d'essieu (12), en particulier à la bride de montage (22) du support d'essieu. (12).

8. Ensemble d'essieu selon l'une des revendications précédentes, **caractérisé en ce que** le support d'essieu (12) et la poutre de support (13) se chevauchent en appui sur la zone de liaison (27) et reposent à plat l'une sur l'autre, une liaison par complémentarité de formes et/ou de serrage étant présente et la zone de liaison (27) étant située sur la face inférieure de la console (24).

9. Ensemble d'essieu selon l'une des revendications précédentes, **caractérisé en ce que** l'ensemble d'essieu (10) est conçu de manière modulaire et peut être adapté à différentes formes de châssis, notamment différentes largeurs de châssis ou de cadre, largeurs de voie et/ou hauteurs de châssis ou de roulement.

10. Ensemble d'essieu selon l'une des revendications précédentes, **caractérisé en ce que** le levier de roue oscillant (14) comporte un bras de levier (35) à une extrémité duquel est disposé le palier de pivotement (33) et à l'autre extrémité duquel est disposé un support de moyeu (36).

11. Châssis comprenant un ensemble d'essieu (10) destiné à des véhicules, en particulier des véhicules routiers (1) comprenant un châssis (2), **caractérisé en ce que** l'ensemble d'essieu (10) est conçu selon l'une au moins des revendications 1 à 10.

12. Châssis selon la revendication 11, **caractérisé en ce que** le châssis (2) comporte au moins un élément de support longitudinal (9) auquel un support d'essieu (14) d'un ensemble d'essieu (10) est fixé au moyen d'une fixation de (23) préférence amovible, en particulier une liaison par vis.

13. Châssis selon la revendication 11 ou 12, **caractérisé en ce qu'**une ou plusieurs poutres de support (13) sont disposées au-dessous de l'élément de support longitudinal (9).

14. Véhicule, en particulier véhicule routier (1) comprenant un châssis (2) et un ensemble d'essieu (10), **caractérisé en ce que** l'ensemble d'essieu (10) est conçu selon l'une au moins des revendications 1 à 10.

15. Véhicule selon la revendication 14, **caractérisé en ce que** le châssis (2) est conçu selon l'une au moins des revendications 11 à 13.
